# EUROPEAN PATENT SPECIFICATION

(11) **EP 4 070 638 B1**
(45) Date of publication and mention of the grant of the patent: **01.05.2024**
(21) Application number: 21908828.3
(22) Date of filing: 25.10.2021
(51) Int. Cl.: A01D 34/00, A01D 69/02

(54) **MOWING CONTROL METHOD FOR INTELLIGENT MOWER**
MÄHSTEUERVERFAHREN FÜR EINEN INTELLIGENTEN MÄHER
PROCÉDÉ DE COMMANDE DE TONTE POUR TONDEUSE INTELLIGENTE

(30) Priority: 25.12.2020 CN 202011563350
(43) Date of publication of application: 12.10.2022
(73) Proprietor: Zhejiang Safun Industrial Co., Ltd, Jinhua, Zhejiang 321300 (CN)
(72) Inventor: GUO, Jianbing, Jinhua, Zhejiang 321300 (CN); LI, Jie, Jinhua, Zhejiang 321300 (CN); ZHUANG, Linqiang, Jinhua, Zhejiang 321300 (CN); ZHOU, Feixiang, Jinhua, Zhejiang 321300 (CN); WU, Changda, Jinhua, Zhejiang 321300 (CN); HUANG, Li, Jinhua, Zhejiang 321300 (CN); SUN, Liangliang, Jinhua, Zhejiang 321300 (CN); SUN, Yingying, Jinhua, Zhejiang 321300 (CN); YING, Xinsen, Jinhua, Zhejiang 321300 (CN)
(74) Representative: Proi World Intellectual Property GmbH
(86) International application number: PCT/CN2021/126007
(87) International publication number: WO 2022/134827

(56) References cited:
- EP-A2- 2 412 223
- WO-A1-2017/154524
- WO-A1-2020/186404
- CN-A- 107 771 510
- CN-A- 108 925 210
- CN-A- 109 997 493
- CN-A- 110 915 404
- CN-A- 111 837 588
- CN-A- 111 837 588
- CN-A- 112 655 353
- CN-U- 210 694 954
- CN-U- 210 694 954
- US-A1- 2013 104 509
- US-A1- 2020 390 029

## Description

### TECHNICAL FIELD

The present invention relates to the field of automatic control, specifically to a mowing control method for an intelligent lawn mower.

### BACKGROUND

With the development of the economy and the accelerated pace of urban construction, intelligent lawn mowers are widely used to maintain and mow the lawns of home yards. The common intelligent lawn mowers in the market are all driven by three motors, two of which are self-propelled motors that control the forward and backward movement and turning of the machine; the remaining one motor is a mowing motor, which drives the blades to achieve the mowing of the lawn.

Currently, all the motors are driven and controlled by a main control unit, and the self-propelled motor and the mowing motor are controlled seperately, that is, the mowing motor is independent of the working state of the self-propelled motor. When mowing the grass, the self-propelled motor and the mowing motor generally run at constant speed, and the speed will not be adjusted according to the condition of the grass. When the grass is dense, the speed of the self-propelled motor is fast, or the speed of the mowing motor is low, which will lead to poor single cutting effect or even shutdown; but when the grass is sparse, the speed of the self-propelled motor is slow or the speed of the mowing motor is high, which will lead to low cutting efficiency or high energy consumption.

EP 2412223 A2 relates to robotic lawn mowers, and more specifically to an area coverage system for a robotic mower.

### SUMMARY OF THE INVENTION

In view of the defects of the prior art that the self-propelled motor and the mowing motor are controlled separately, when the grass is dense, it will lead to poor single cutting effect or even shutdown; but when the grass is sparse, it will lead to low cutting efficiency or high energy consumption, the present invention provides a new mowing control method for an intelligent lawn mower.

In order to solve the technical problems, the present disclosure can be realized through the following technical schemes:
A mowing control method for an intelligent lawn mower, said intelligent lawn mower comprises a left self-propelled motor, a left self-propelled motor control unit, a right self-propelled motor, a right self-propelled motor control unit, a mowing motor, a mowing motor control unit, a main control unit, and a boundary sensor, said left self-propelled motor is connected to said left self-propelled motor control unit, said right self-propelled motor is connected to said right self-propelled motor control unit, said mowing motor is connected to said mowing motor control unit, and said left self-propelled motor control unit, said right self-propelled motor control unit, said mowing motor control unit and said boundary sensor are respectively connected to said main control unit, said control method comprises the following steps:
A. acquiring, by said mowing motor control unit, a current I0 when said mowing motor drives a blade for no-load operation and a real-time working current I, and setting a current threshold value for said mowing motor to switch from a low-speed mode to a high-speed mode as It1, a current threshold value for said mowing motor to switch from the high-speed mode to the low-speed mode as It2, a current limit value of a mowing drive current as IR, a minimum operating threshold value for speed protection of said mowing motor as Vmin, and a maximum operating speed of said mowing motor as Vmax;
B. acquiring, by said left self-propelled motor control unit and said right self-propelled motor control unit respectively, real-time speed V of said left self-propelled motor and said right self-propelled motor during operation, and setting the speed during low-speed operation as VL, and the speed during high-speed operation as VH;
C. when working, said mowing motor runs in the low-speed mode, and said left self-propelled motor and said right self-propelled motor run at the speed VH;
D. when encountering grassy areas, if the real-time working current I of said mowing motor is I0<I<It1, then keeping the current state; if the real-time working current I of said mowing motor is I≥It1 and it lasts for a period of T1, then skipping to step E; if the real-time working current I of said mowing motor equals to the current limit value IR, then skipping to step G;
E. said mowing motor control unit switches said mowing motor to the high-speed mode, at the same time said mowing motor control unit requests said main control unit, said main control unit sends a deceleration command to said left self-propelled motor control unit and said right self-propelled motor control unit, and said left self-propelled motor control unit and said right self-propelled motor control unit, after receiving the deceleration command, reduce the real-time speed V of said left self-propelled motor and said right self-propelled motor respectively at the same time, so that the real-time speed V is dynamically adjusted between VL and VH; subsequently, if the real-time working current I of said mowing motor is I<It2 and it lasts for a period of T2, then skipping to step F; if the real-time current I of said mowing motor equals to the current limit value IR, then skipping to step G;
F. said mowing motor control unit controls said mowing motor to switch to the low-speed mode, at the same time said mowing motor control unit requests said main control unit, said main control unit sends an acceleration command to said left self-propelled motor control unit and said right self-propelled motor control unit, and said left self-propelled motor control unit and said right self-propelled motor control unit, after receiving the acceleration command, switch the real-time speed V of said left self-propelled motor and said right self-propelled motor to VH respectively at the same time; subsequently, if the real-time working current I of said mowing motor is I≥It1 and it lasts for a period of T1, then skipping to the step E; if the real-time working current I of said mowing motor equals to the current limit value IR, then skipping to step G;
G. said mowing motor control unit controls said mowing motor to switch to the high-speed mode, said mowing motor control unit requests said main control unit, said main control unit sends a deceleration command to said left self-propelled motor control unit and said right self-propelled motor control unit, and said left self-propelled motor control unit and said right self-propelled motor control unit, after receiving the deceleration command, adjust the speed of said left self-propelled motor and said right self-propelled motor to VL respectively; subsequently, if the real-time working current I of said mowing motor is I<It2 and it lasts for a period of T2, then skipping to the step F; if the load on said mowing motor is too high and causes overcurrent shutdown protection of said mowing motor or the speed of said mowing motor is < Vmin and it lasts for a period of T3, then skipping to step H;
H. said mowing motor control unit controls said mowing motor to stop, at the same time said mowing motor control unit intercommunicates with said main control unit, and said left self-propelled motor control unit and said right self-propelled motor control unit control said left self-propelled motor and said right self-propelled motor to stop respectively, then said left self-propelled motor and said right self-propelled motor retreat first and then continue to work along the original forward cutting path; after attempting for M times, wherein 1≤M≤5; if said left self-propelled motor and said right self-propelled motor stop again, it is determined that the area is a dense grass area, then bypassing the dense grass area and skipping to the step C to continue working

Wherein, steps A and B are used to acquire or set various parameters, so as to prepare for the subsequent mowing control, wherein the current limit value IR of the mowing drive current adopts the rms current.

In the step C, at this point, the intelligent lawn mower has just started working. Before encountering grassy areas, by allowing the mowing motor to run in a low-speed mode and allowing the left self-propelled motor and the right self-propelled motor to run at the speed VH, the energy consumption can be reduced, and the intelligent lawn mower is also enabled to pass quickly, so that it can reach grassy areas for operation as soon as possible.

In the step D, when encountering grassy areas, a variety of situations may occur. By judging the real-time working current I of the mowing motor, the follow-up actions of the intelligent lawn mower under different working conditions can be well controlled, so as to better adapt to the working requirements in different situations.

In the step E, at this point, the area has been determined as a dense grass area by judging the real-time working current I of the mowing motor, then the cutting effect can be greatly improved by increasing the speed of the mowing motor. At this point, if the left self-propelled motor and the right self-propelled motor go too fast, the same cutting speed requires a greater input power. When the grass is particularly dense or particularly hard, the current limit value of the mowing motor will be definitely exceeded, causing the mowing motor control unit to automatically control the mowing motor to reduce its cutting speed; but after the speed of the mowing motor is reduced, the grass will not be cut or will not be cut evenly, or the lawn mower will go through the area directly. However, if the left self-propelled motor and the right self-propelled motor go too slowly, the mowing area per unit time will be reduced. In this step, by dynamically adjusting the speed of the left self-propelled motor and the right self-propelled motor, cutting can be done at the fastest walking speed under the premise of constant input while guaranteeing the mowing effect. After the dense grass area is cut, skipping to other steps according to different working conditions.

In the step F, at this point, the area has been determined as a sparse grass area or a grass-free area by judging the real-time working current I of the mowing motor. In the case of no mowing or little grass, high mowing speed will only increase energy consumption and noise, and the speed of the self-propelled motor determines the area that the intelligent lawn mower can cover after a single charge. In this step, by automatically reducing the speed of the mowing motor and increasing the speed of the left self-propelled motor and the right self-propelled motor to the maximum after judging the working current of the mowing motor, energy consumption can be reduced, and the working coverage area of the intelligent lawn mower can be increased. When subsequently encountering grassy areas, a variety of situations may occur. By judging the real-time working current I of the mowing motor, the follow-up actions of the intelligent lawn mower under different working conditions can be well controlled, so as to better adapt to the working requirements in different situations.

In the step G, at this point, the real-time working current of the mowing motor has reached the limit of the mowing motor control unit, and the density or hardness of the grass has exceeded the load capacity of the mowing motor. If the load continues to increase at this point, causing the stall or nearly stall of the mowing motor, then skipping to a stall protection step; if such a state is only temporary, then skipping to the working condition of sparse grass areas.

In the step H, at this point, because the grassy area is too dense, in order to avoid the intelligent lawn mower being damaged due to the excessive load, the control method in the step H enables the intelligent lawn mower to either cut all the current grassy area through several attempts, or directly bypass the current grassy area and find other grassy areas for cutting, making it more intelligent in use.

Preferably, in the step E, the real-time speed V is dynamically adjusted between VL and VH following an equation V=VH*(I0/I)*K, where K is an adjustment coefficient, 0≤K≤1.

By dynamically adjusting the speed of the left self-propelled motor and the right self-propelled motor, the mowing effect and the coverage area of the intelligent lawn mower can be improved greatly under the condition of a constant input power.

Preferably, in the step H, said left self-propelled motor and said right self-propelled motor retreat first and then continue to work along the original cutting path, for which the specific steps are: said left self-propelled motor and said right self-propelled motor retreat at the speed VH for X1*N1 turns, and then continue to work at the speed VL along the original cutting path, said X1 is the coefficient of motor rotation, 0.1≤X1≤1, 1≤N1≤3.

Through the above steps, the intelligent lawn mower can be more intelligent and less likely to report a stall error; and the grass in the blind area which is formed during the judgement of switching from a sparse grass area to a dense grass area can be cut seamlessly; in addition, the backward operation can loosen the grass that was stuck before, and can improve the cutting effect when cutting again.

Preferably, in the step H, the method for bypassing the dense grass area comprises the following steps:
F1. said left self-propelled motor and said right self-propelled motor retreat first at the speed VH for X2*G*N2 turns and then stop, where 0.1≤X2≤1, 1≤N2≤3, 1≤G≤5;
F2. starting from the stopping point, with the center of the circle located on the line defined by the boundary sensor and the stopping point, detouring forward in a semicircle of radius R towards the interior of the boundary line, where 0.3≤R≤1.

Through the steps F1 and F2, the working conditions of being unable to cut or getting stuck can be avoided, making the intelligent lawn mower less prone to be blocked, more intelligent and more reliable.

Preferably, in the step A, said It1 = I0*P, 1.1≤P≤5, and in the step D, step F, and step G, 0.1 s≤T1≤5 s.

The P value determines the sensitivity of the intelligent lawn mower in the judgement of dense grass areas. The smaller the P value, the more sensitive the intelligent lawn mower is to define a dense grass area, but there may be some misjudgment; the larger the P value, the more obtuse the intelligent lawn mower is to define a dense grass area, but it may be more energy efficient when the grass is not particularly dense. T1 determines the response speed of the intelligent lawn mower. The smaller T1, the faster the response speed is when a dense grass area is detected; the larger T1, the slower the response speed of the intelligent lawn mower. Limiting the P value and T1 within the above ranges can balance the judgement and the response speed of operation at the same time.

Preferably, in the step A, said It2 = It1*Y, 1.2≤Y≤ 3, and in the step E and step G, 1 s≤T2≤5 s.

The Y value determines the sensitivity of the intelligent lawn mower in the judgement of sparse grass areas. The smaller the Y value, the more sensitive the intelligent lawn mower is to define a sparse grass area, but it is prone to be a misjudgment; the larger the Y value, the more obtuse the intelligent lawn mower is to define a sparse grass area, which may reduce the frequency of switching between high and low speed. T2 determines the response speed of the intelligent lawn mower. The smaller T2, the faster the response speed is when a sparse grass area is detected; the larger T2, the less chance of misjudgment. Limiting the Y value and T2 within the above ranges can balance the judgement and the response speed of operation at the same time.

Preferably, in the step A, Vmin = Vmax*L, 0.15≤L≤0.65, and in the step G, 0.1 s≤T3≤3 s.

L determines the shutdown protection speed value of the mowing motor. The larger L, the more sensitive the protection, and the less likely it is to burn-in; the smaller L, the stronger the overload capacity of the mowing motor, and the less likely it is to stall and stop. T3 determines the sensitivity of the intelligent lawn mower to the mowing motor protection. The larger T3, the less likely the mowing motor will be stalled; the smaller T3, the less chance of burn-in. The above value ranges can ensure the maximum motor overload capacity without burn-in.

In the step H, 1≤M≤5.

M determines the number of attempts after the mowing motor is stalled. The larger M, the cutting effect can be improved, but it will also increase the energy consumption of the intelligent lawn mower; the smaller M, the energy consumption can be reduced, but the cutting effect may be slightly worse. The above value range can achieve a better cutting effect while ensuring energy saving.

The present invention has the following beneficial effects:
1. Through the mowing control method of the present invention, the lawn can be directly cut and maintained by the intelligent lawn mower in most applications without manual intervention.
2. Through the mowing control method of the present invention, the cutting effect of dense grass areas can be improved significantly. For conventional intelligent lawn mowers, both the self-propelled motor and the mowing motor run at constant speed, so the lawn mowers may be easily blocked in dense grass areas, or they just push the grass down without cutting it completely. In contrast, in the mowing control method of the present invention, the speed of the left self-propelled motor and the right self-propelled motor is dynamically adjusted according to the actual working conditions of the mowing motor. Under the same energy consumption, the cutting effect of dense grass areas is greatly improved. Within a certain range, the grass in the area traversed by the intelligent lawn mower is cut into a neat path according to the cutter diameter, and the intelligent lawn mower will not be blocked due to the deep grass.
3. In the range of a sparse grass area, the present invention can prolong the service time of the intelligent lawn mower after a single charge. Most of conventional intelligent lawn mowers generally run at constant speed. In order to ensure the mowing effect, most solutions will increase the speed of the mowing motor. However, in sparse grass areas, the mowing motor runs almost with no load, and high-speed cutting will cause waste of energy. The present invention adopts an intelligent high-and-low speed scheme, where in dense grass areas, the speed of the mowing motor will be increased so as to greatly improve the cutting effect; while in sparse grass areas, the speed of the mowing motor will be reduced, thereby reducing the energy consumption and prolonging the service time of the intelligent lawn mower after a single charge. It is tested that by employing the mowing control method of the present invention, the energy consumption of the mowing motor alone is reduced by about 30%.
4. The noise of the intelligent lawn mower is reduced. By employing the mowing control method of the present invention, in sparse grass areas or during post-maintenance (mostly with small load), the mowing motor can be intelligently switched to a low-speed mode, thereby reducing the noise of the intelligent lawn mower. It is tested that by employing the mowing control method of the present invention, the noise is reduced by about 3 dB.

### BRIEF DESCRIPTION OF THE DRAWINGS

Fig. 1 is a structural schematic diagram of an intelligent lawn mower;
Fig. 2 is a diagram showing the module connection of the present invention;
Fig. 3 shows a structural schematic diagram when bypassing a dense grass area according to the present invention;
Fig. 4 is a flow chart of the present invention.

### DETAILED DESCRIPTION

The present invention will be described in further detail below in conjunction with the accompanying drawings 1-4 and specific embodiments, but they are not intended to limit the present invention:

### Embodiment 1

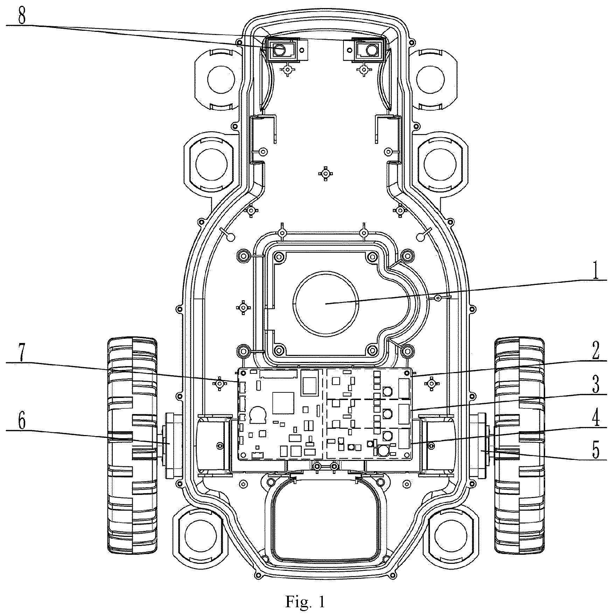

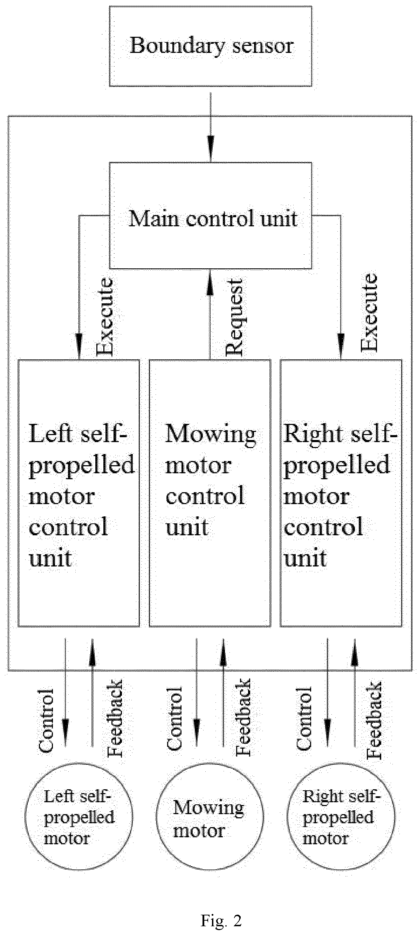

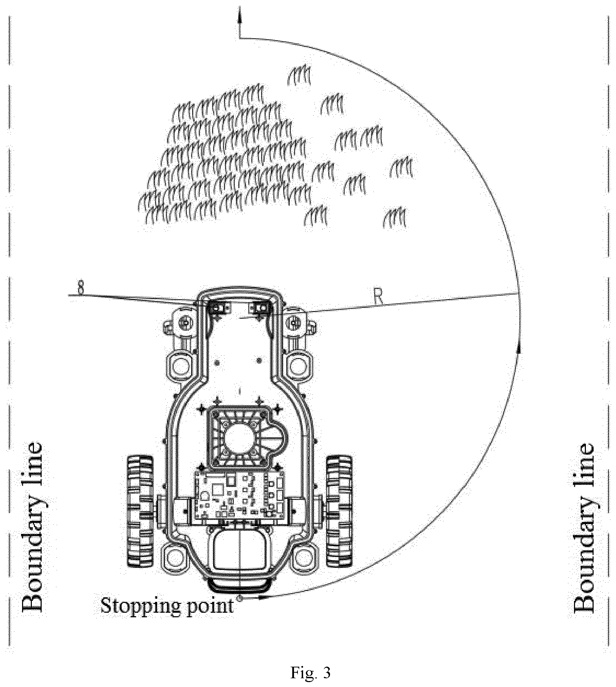

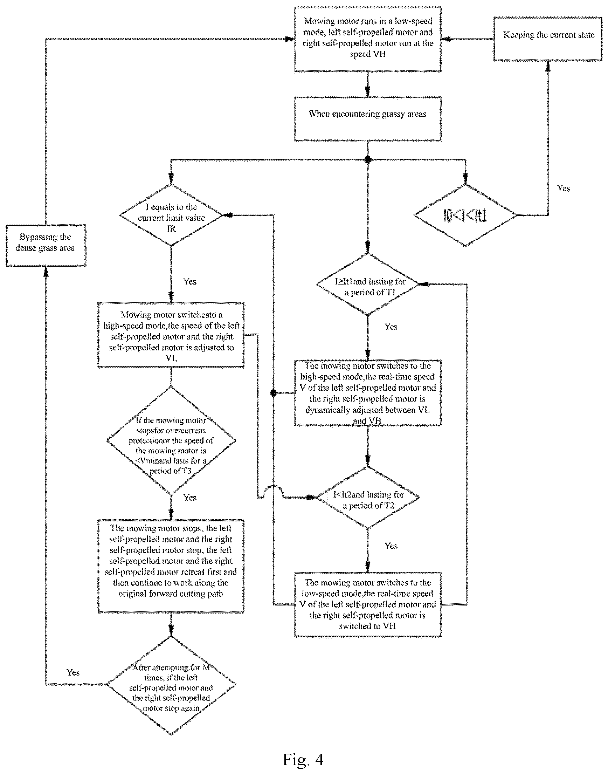

As shown in Figure 1 to Figure 4, a mowing control method for an intelligent lawn mower, said intelligent lawn mower comprises a left self-propelled motor 6, a left self-propelled motor control unit 2, a right self-propelled motor 5, a right self-propelled motor control unit 4, a mowing motor 1, a mowing motor control unit 3, a main control unit 7, and a boundary sensor 8, said left self-propelled motor 6 is connected to said left self-propelled motor control unit 2, said right self-propelled motor 5 is connected to said right self-propelled motor control unit 4, said mowing motor 1 is connected to said mowing motor control unit 3, and said left self-propelled motor control unit 2, said right self-propelled motor control unit 4, said mowing motor control unit 3 and said boundary sensor 8 are respectively connected to said main control unit 7, said control method comprises the following steps:
A. acquiring, by said mowing motor control unit 3, a current I0 when said mowing motor 1 drives a blade for no-load operation and a real-time working current I, and setting a current threshold value for said mowing motor 1 to switch from a low-speed mode to a high-speed mode as It1, a current threshold value for said mowing motor 1 to switch from the high-speed mode to the low-speed mode as It2, a current limit value of a mowing drive current as IR, a minimum operating threshold value for speed protection of said mowing motor 1 as Vmin, and a maximum operating speed of said mowing motor 1 as Vmax;
B. acquiring, by said left self-propelled motor control unit 2 and said right self-propelled motor control unit 4 respectively, real-time speed V of said left self-propelled motor 6 and said right self-propelled motor 5 during operation, and setting the speed during low-speed operation as VL, and the speed during high-speed operation as VH;
C. when working, said mowing motor 1 runs in the low-speed mode, and said left self-propelled motor 6 and said right self-propelled motor 5 run at the speed VH;
D. when encountering grassy areas, if the real-time working current I of said mowing motor 1 is I0<I<It1, then keeping the current state; if the real-time working current I of said mowing motor 1 is I≥It1 and it lasts for a period of T1, then skipping to step E; if the real-time working current I of said mowing motor 1 equals to the current limit value IR, then skipping to step G;
E. said mowing motor control unit 3 switches said mowing motor 1 to the high-speed mode, at the same time said mowing motor control unit 3 requests said main control unit 7, said main control unit 7 sends a deceleration command to said left self-propelled motor control unit 2 and said right self-propelled motor control unit 4, and said left self-propelled motor control unit 2 and said right self-propelled motor control unit 4, after receiving the deceleration command, reduce the real-time speed V of said left self-propelled motor 6 and said right self-propelled motor 5 respectively at the same time, so that the real-time speed V is dynamically adjusted between VL and VH; subsequently, if the real-time working current I of said mowing motor 1 is I<It2 and it lasts for a period of T2, then skipping to step F; if the real-time current I of said mowing motor 1 equals to the current limit value IR, then skipping to step G;
F. said mowing motor control unit 3 controls said mowing motor 1 to switch to the low-speed mode, at the same time said mowing motor control unit 3 requests said main control unit 7, said main control unit 7 sends an acceleration command to said left self-propelled motor control unit 2 and said right self-propelled motor control unit 4, and said left self-propelled motor control unit 2 and said right self-propelled motor control unit 4, after receiving the acceleration command, switch the real-time speed V of said left self-propelled motor 6 and said right self-propelled motor 5 to VH respectively at the same time; subsequently, if the real-time working current I of said mowing motor 1 is I≥It1 and it lasts for a period of T1, then skipping to the step E; if the real-time working current I of said mowing motor 1 equals to the current limit value IR, then skipping to step G;
G. said mowing motor control unit 3 controls said mowing motor 1 to switch to the high-speed mode, said mowing motor control unit 3 requests said main control unit 7, said main control unit 7 sends a deceleration command to said left self-propelled motor control unit 2 and said right self-propelled motor control unit 4, and said left self-propelled motor control unit 2 and said right self-propelled motor control unit 4, after receiving the deceleration command, adjust the speed of said left self-propelled motor 6 and said right self-propelled motor 5 to VL respectively; subsequently, if the real-time working current I of said mowing motor 1 is I<It2 and it lasts for a period of T2, then skipping to the step F; if the load on said mowing motor 1 is too high and causes overcurrent shutdown protection of said mowing motor 1 or the speed of said mowing motor 1 is < Vmin and it lasts for a period of T3, then skipping to step H;
H. said mowing motor control unit 3 controls said mowing motor 1 to stop, at the same time said mowing motor control unit 3 intercommunicates with said main control unit 7, and said left self-propelled motor control unit 2 and said right self-propelled motor control unit 4 control said left self-propelled motor 6 and said right self-propelled motor 5 to stop respectively, then said left self-propelled motor 6 and said right self-propelled motor 5 retreat first and then continue to work along the original forward cutting path; after attempting for M times, wherein 1≤M≤5; if said left self-propelled motor 6 and said right self-propelled motor 5 stop again, it is determined that the area is a dense grass area, then bypassing the dense grass area and skipping to the step C to continue working.

Preferably, in the step E, the real-time speed V is dynamically adjusted between VL and VH following an equation V=VH*(I0/I)*K, where K is an adjustment coefficient, 0≤K≤1.

Preferably, in the step H, said left self-propelled motor 6 and said right self-propelled motor 5 retreat first and then continue to work along the original cutting path, for which the specific steps are: said left self-propelled motor 6 and said right self-propelled motor 5 retreat at the speed VH for X1*N1 turns, and then continue to work at the speed VL along the original cutting path, said X1 is the coefficient of motor rotation,X1 is 0.1, N1is 1.

Preferably, in the step H, the method for bypassing the dense grass area comprises the following steps:
F1. said left self-propelled motor 6 and said right self-propelled motor 5 retreat first at the speed VH for X2*G*N2 turns and then stop, where 0.1≤X2≤1, 1≤N2≤3, 1≤G≤5;
F2. starting from the stopping point, with the center of the circle located on the line defined by the boundary sensor 8 and the stopping point, detouring forward in a semicircle of radius R towards the interior of the boundary line, where 0.3≤R≤1.

Preferably, in the step A, said It1 = I0*P, P is 1.1, and in the step D, step F, and step G, T1 is 0.1s.

Preferably, in the step A, said It2 = It1*Y, Y is 1.2, and in the step E and step G, T2 is 1s.

Preferably, in the step A, Vmin = Vmax*L, L is 0.15, and in the step G, T3 is 0.1s.

Preferably, in the step H, M is 1.

### Embodiment 2

As shown in Figure 1 to Figure 4, a mowing control method for an intelligent lawn mower, said intelligent lawn mower comprises a left self-propelled motor 6, a left self-propelled motor control unit 2, a right self-propelled motor 5, a right self-propelled motor control unit 4, a mowing motor 1, a mowing motor control unit 3, a main control unit 7, and a boundary sensor 8, said left self-propelled motor 6 is connected to said left self-propelled motor control unit 2, said right self-propelled motor 5 is connected to said right self-propelled motor control unit 4, said mowing motor 1 is connected to said mowing motor control unit 3, and said left self-propelled motor control unit 2, said right self-propelled motor control unit 4, said mowing motor control unit 3 and said boundary sensor 8 are respectively connected to said main control unit 7, said control method comprises the following steps:
A. acquiring, by said mowing motor control unit 3, a current I0 when said mowing motor 1 drives a blade for no-load operation and a real-time working current I, and setting a current threshold value for said mowing motor 1 to switch from a low-speed mode to a high-speed mode as It1, a current threshold value for said mowing motor 1 to switch from the high-speed mode to the low-speed mode as It2, a current limit value of a mowing drive current as IR, a minimum operating threshold value for speed protection of said mowing motor 1 as Vmin, and a maximum operating speed of said mowing motor 1 as Vmax;
B. acquiring, by said left self-propelled motor control unit 2 and said right self-propelled motor control unit 4 respectively, real-time speed V of said left self-propelled motor 6 and said right self-propelled motor 5 during operation, and setting the speed during low-speed operation as VL, and the speed during high-speed operation as VH;
C. when working, said mowing motor 1 runs in the low-speed mode, and said left self-propelled motor 6 and said right self-propelled motor 5 run at the speed VH;
D. when encountering grassy areas, if the real-time working current I of said mowing motor 1 is I0<I<It1, then keeping the current state; if the real-time working current I of said mowing motor 1 is I≥It1 and it lasts for a period of T1, then skipping to step E; if the real-time working current I of said mowing motor 1 equals to the current limit value IR, then skipping to step G;
E. said mowing motor control unit 3 switches said mowing motor 1 to the high-speed mode, at the same time said mowing motor control unit 3 requests said main control unit 7, said main control unit 7 sends a deceleration command to said left self-propelled motor control unit 2 and said right self-propelled motor control unit 4, and said left self-propelled motor control unit 2 and said right self-propelled motor control unit 4, after receiving the deceleration command, reduce the real-time speed V of said left self-propelled motor 6 and said right self-propelled motor 5 respectively at the same time, so that the real-time speed V is dynamically adjusted between VL and VH; subsequently, if the real-time working current I of said mowing motor 1 is I<It2 and it lasts for a period of T2, then skipping to step F; if the real-time current I of said mowing motor 1 equals to the current limit value IR, then skipping to step G;
F. said mowing motor control unit 3 controls said mowing motor 1 to switch to the low-speed mode, at the same time said mowing motor control unit 3 requests said main control unit 7, said main control unit 7 sends an acceleration command to said left self-propelled motor control unit 2 and said right self-propelled motor control unit 4, and said left self-propelled motor control unit 2 and said right self-propelled motor control unit 4, after receiving the acceleration command, switch the real-time speed V of said left self-propelled motor 6 and said right self-propelled motor 5 to VH respectively at the same time; subsequently, if the real-time working current I of said mowing motor 1 is I≥It1 and it lasts for a period of T1, then skipping to the step E; if the real-time working current I of said mowing motor 1 equals to the current limit value IR, then skipping to step G;
G. said mowing motor control unit 3 controls said mowing motor 1 to switch to the high-speed mode, said mowing motor control unit 3 requests said main control unit 7, said main control unit 7 sends a deceleration command to said left self-propelled motor control unit 2 and said right self-propelled motor control unit 4, and said left self-propelled motor control unit 2 and said right self-propelled motor control unit 4, after receiving the deceleration command, adjust the speed of said left self-propelled motor 6 and said right self-propelled motor 5 to VL respectively; subsequently, if the real-time working current I of said mowing motor 1 is I<It2 and it lasts for a period of T2, then skipping to the step F; if the load on said mowing motor 1 is too high and causes overcurrent shutdown protection of said mowing motor 1 or the speed of said mowing motor 1 is < Vmin and it lasts for a period of T3, then skipping to step H;
H. said mowing motor control unit 3 controls said mowing motor 1 to stop, at the same time said mowing motor control unit 3 intercommunicates with said main control unit 7, and said left self-propelled motor control unit 2 and said right self-propelled motor control unit 4 control said left self-propelled motor 6 and said right self-propelled motor 5 to stop respectively, then said left self-propelled motor 6 and said right self-propelled motor 5 retreat first and then continue to work along the original forward cutting path; after attempting for M times, wherein 1≤M≤5; if said left self-propelled motor 6 and said right self-propelled motor 5 stop again, it is determined that the area is a dense grass area, then bypassing the dense grass area and skipping to the step C to continue working.

Preferably, in the step E, the real-time speed V is dynamically adjusted between VL and VH following an equation V=VH*(I0/I)*K, where K is an adjustment coefficient, 0≤K≤1.

Preferably, in the step H, said left self-propelled motor 6 and said right self-propelled motor 5 retreat first and then continue to work along the original cutting path, for which the specific steps are: said left self-propelled motor 6 and said right self-propelled motor 5 retreat at the speed VH for X1*N1 turns, and then continue to work at the speed VL along the original cutting path, said X1 is the coefficient of motor rotation,X1 is 1, N1is 3.

Preferably, in the step H, the method for bypassing the dense grass area comprises the following steps:
F1. said left self-propelled motor 6 and said right self-propelled motor 5 retreat first at the speed VH for X2*G*N2 turns and then stop, where 0.1≤X2≤1, 1≤N2≤3, 1≤G≤5;
F2. starting from the stopping point, with the center of the circle located on the line defined by the boundary sensor 8 and the stopping point, detouring forward in a semicircle of radius R towards the interior of the boundary line, where 0.3≤R≤1.

Preferably, in the step A, said It1 = I0*P, P is 5, and in the step D, step F, and step G, T1 is 5s.

Preferably, in the step A, said It2 = It1*Y, Y is 3, and in the step E and step G, T2 is 5s.

Preferably, in the step A, Vmin = Vmax*L, L is 0.65, and in the step G, T3 is 3s.

Preferably, in the step H, M is 5.

### Embodiment 3

As shown in Figure 1 to Figure 4, a mowing control method for an intelligent lawn mower, said intelligent lawn mower comprises a left self-propelled motor 6, a left self-propelled motor control unit 2, a right self-propelled motor 5, a right self-propelled motor control unit 4, a mowing motor 1, a mowing motor control unit 3, a main control unit 7, and a boundary sensor 8, said left self-propelled motor 6 is connected to said left self-propelled motor control unit 2, said right self-propelled motor 5 is connected to said right self-propelled motor control unit 4, said mowing motor 1 is connected to said mowing motor control unit 3, and said left self-propelled motor control unit 2, said right self-propelled motor control unit 4, said mowing motor control unit 3 and said boundary sensor 8 are respectively connected to said main control unit 7, said control method comprises the following steps:
A. acquiring, by said mowing motor control unit 3, a current I0 when said mowing motor 1 drives a blade for no-load operation and a real-time working current I, and setting a current threshold value for said mowing motor 1 to switch from a low-speed mode to a high-speed mode as It1, a current threshold value for said mowing motor 1 to switch from the high-speed mode to the low-speed mode as It2, a current limit value of a mowing drive current as IR, a minimum operating threshold value for speed protection of said mowing motor 1 as Vmin, and a maximum operating speed of said mowing motor 1 as Vmax;
B. acquiring, by said left self-propelled motor control unit 2 and said right self-propelled motor control unit 4 respectively, real-time speed V of said left self-propelled motor 6 and said right self-propelled motor 5 during operation, and setting the speed during low-speed operation as VL, and the speed during high-speed operation as VH;
C. when working, said mowing motor 1 runs in the low-speed mode, and said left self-propelled motor 6 and said right self-propelled motor 5 run at the speed VH;
D. when encountering grassy areas, if the real-time working current I of said mowing motor 1 is I0<I<It1, then keeping the current state; if the real-time working current I of said mowing motor 1 is I≥It1 and it lasts for a period of T1, then skipping to step E; if the real-time working current I of said mowing motor 1 equals to the current limit value IR, then skipping to step G;
E. said mowing motor control unit 3 switches said mowing motor 1 to the high-speed mode, at the same time said mowing motor control unit 3 requests said main control unit 7, said main control unit 7 sends a deceleration command to said left self-propelled motor control unit 2 and said right self-propelled motor control unit 4, and said left self-propelled motor control unit 2 and said right self-propelled motor control unit 4, after receiving the deceleration command, reduce the real-time speed V of said left self-propelled motor 6 and said right self-propelled motor 5 respectively at the same time, so that the real-time speed V is dynamically adjusted between VL and VH; subsequently, if the real-time working current I of said mowing motor 1 is I<It2 and it lasts for a period of T2, then skipping to step F; if the real-time current I of said mowing motor 1 equals to the current limit value IR, then skipping to step G;
F. said mowing motor control unit 3 controls said mowing motor 1 to switch to the low-speed mode, at the same time said mowing motor control unit 3 requests said main control unit 7, said main control unit 7 sends an acceleration command to said left self-propelled motor control unit 2 and said right self-propelled motor control unit 4, and said left self-propelled motor control unit 2 and said right self-propelled motor control unit 4, after receiving the acceleration command, switch the real-time speed V of said left self-propelled motor 6 and said right self-propelled motor 5 to VH respectively at the same time; subsequently, if the real-time working current I of said mowing motor 1 is I≥It1 and it lasts for a period of T1, then skipping to the step E; if the real-time working current I of said mowing motor 1 equals to the current limit value IR, then skipping to step G;
G. said mowing motor control unit 3 controls said mowing motor 1 to switch to the high-speed mode, said mowing motor control unit 3 requests said main control unit 7, said main control unit 7 sends a deceleration command to said left self-propelled motor control unit 2 and said right self-propelled motor control unit 4, and said left self-propelled motor control unit 2 and said right self-propelled motor control unit 4, after receiving the deceleration command, adjust the speed of said left self-propelled motor 6 and said right self-propelled motor 5 to VL respectively; subsequently, if the real-time working current I of said mowing motor 1 is I<It2 and it lasts for a period of T2, then skipping to the step F; if the load on said mowing motor 1 is too high and causes overcurrent shutdown protection of said mowing motor 1 or the speed of said mowing motor 1 is < Vmin and it lasts for a period of T3, then skipping to step H;
H. said mowing motor control unit 3 controls said mowing motor 1 to stop, at the same time said mowing motor control unit 3 intercommunicates with said main control unit 7, and said left self-propelled motor control unit 2 and said right self-propelled motor control unit 4 control said left self-propelled motor 6 and said right self-propelled motor 5 to stop respectively, then said left self-propelled motor 6 and said right self-propelled motor 5 retreat first and then continue to work along the original forward cutting path; after attempting for M times, wherein 1≤M≤5; if said left self-propelled motor 6 and said right self-propelled motor 5 stop again, it is determined that the area is a dense grass area, then bypassing the dense grass area and skipping to the step C to continue working.

Preferably, in the step E, the real-time speed V is dynamically adjusted between VL and VH following an equation V=VH*(I0/I)*K, where K is an adjustment coefficient, 0≤K≤1.

Preferably, in the step H, said left self-propelled motor 6 and said right self-propelled motor 5 retreat first and then continue to work along the original cutting path, for which the specific steps are: said left self-propelled motor 6 and said right self-propelled motor 5 retreat at the speed VH for X1*N1 turns, and then continue to work at the speed VL along the original cutting path, said X1 is the coefficient of motor rotation, X1 is 0.5, N1is 2.

Preferably, in the step H, the method for bypassing the dense grass area comprises the following steps:
F1. said left self-propelled motor 6 and said right self-propelled motor 5 retreat first at the speed VH for X2*G*N2 turns and then stop, where 0.1≤X2≤1, 1≤N2≤3, 1≤G≤5;
F2. starting from the stopping point, with the center of the circle located on the line defined by the boundary sensor 8 and the stopping point, detouring forward in a semicircle of radius R towards the interior of the boundary line, where 0.3≤R≤1.

Preferably, in the step A, said It1 = I0*P, P is 3, and in the step D, step F, and step G, T1 is 2.5s.

Preferably, in the step A, said It2 = It1*Y, Y is 2.1, and in the step E and step G, T2 is 3s.

Preferably, in the step A, Vmin = Vmax*L, L is 0.4, and in the step G, T3 is 1.5s.

Preferably, in the step H, M is 3.

## Claims

1. A mowing control method for an intelligent lawn mower, said intelligent lawn mower comprises a left self-propelled motor (6), a left self-propelled motor control unit (2), a right self-propelled motor (5), a right self-propelled motor control unit (4), a mowing motor (1), a mowing motor control unit (3), a main control unit (7), and a boundary sensor (8), said left self-propelled motor (6) is connected to said left self-propelled motor control unit (2), said right self-propelled motor (5) is connected to said right self-propelled motor control unit (4), said mowing motor (1) is connected to said mowing motor control unit (3), and said left self-propelled motor control unit (2), said right self-propelled motor control unit (4), said mowing motor control unit (3) and said boundary sensor (8) are respectively connected to said main control unit (7), wherein said control method comprises the following steps:
A. acquiring, by said mowing motor control unit (3), a current I0 when said mowing motor (1) drives a blade for no-load operation and a real-time working current I, and setting a current threshold value for said mowing motor (1) to switch from a low-speed mode to a high-speed mode as It1, a current threshold value for said mowing motor (1) to switch from the high-speed mode to the low-speed mode as It2, a current limit value of a mowing drive current as IR, a minimum operating threshold value for speed protection of said mowing motor (1) as Vmin, and a maximum operating speed of said mowing motor (1) as Vmax;
**characterized in that** the mowing control method further comprises the following steps:
B. acquiring, by said left self-propelled motor control unit (2) and said right self-propelled motor control unit (4) respectively, real-time speed V of said left self-propelled motor (6) and said right self-propelled motor (5) during operation, and setting the speed during low-speed operation as VL, and the speed during high-speed operation as VH;
C. when working, said mowing motor (1) runs in the low-speed mode, and said left self-propelled motor (6) and said right self-propelled motor (5) run at the speed VH;
D. when encountering grassy areas, if the real-time working current I of said mowing motor (1) is I0<I<It1, then keeping the current state; if the real-time working current I of said mowing motor (1) is I≥It1 and it lasts for a period of T1, then skipping to step E; if the real-time working current I of said mowing motor (1) equals to the current limit value IR, then skipping to step G;
E. said mowing motor control unit (3) switches said mowing motor (1) to the high-speed mode, at the same time said mowing motor control unit (3) requests said main control unit (7), said main control unit (7) sends a deceleration command to said left self-propelled motor control unit (2) and said right self-propelled motor control unit (4), and said left self-propelled motor control unit (2) and said right self-propelled motor control unit (4), after receiving the deceleration command, reduce the real-time speed V of said left self-propelled motor (6) and said right self-propelled motor (5) respectively at the same time, so that the real-time speed V is dynamically adjusted between VL and VH; subsequently, if the real-time working current I of said mowing motor (1) is I<It2 and it lasts for a period of T2, then skipping to step F; if the real-time current I of said mowing motor (1) equals to the current limit value IR, then skipping to step G;
F. said mowing motor control unit (3) controls said mowing motor (1) to switch to the low-speed mode, at the same time said mowing motor control unit (3) requests said main control unit (7), said main control unit (7) sends an acceleration command to said left self-propelled motor control unit (2) and said right self-propelled motor control unit (4), and said left self-propelled motor control unit (2) and said right self-propelled motor control unit (4), after receiving the acceleration command, switch the real-time speed V of said left self-propelled motor (6) and said right self-propelled motor (5) to VH respectively at the same time; subsequently, if the real-time working current I of said mowing motor (1) is I≥It1 and it lasts for a period of T1, then skipping to the step E; if the real-time working current I of said mowing motor (1) equals to the current limit value IR, then skipping to step G;
G said mowing motor control unit (3) controls said mowing motor (1) to switch to the high-speed mode, said mowing motor control unit (3) requests said main control unit (7), said main control unit (7) sends a deceleration command to said left self-propelled motor control unit (2) and said right self-propelled motor control unit (4), and said left self-propelled motor control unit (2) and said right self-propelled motor control unit (4), after receiving the deceleration command, adjust the speed of said left self-propelled motor (6) and said right self-propelled motor (5) to VL respectively; subsequently, if the real-time working current I of said mowing motor (1) is I<It2 and it lasts for a period of T2, then skipping to the step F; if the load on said mowing motor (1) is too high and causes overcurrent shutdown protection of said mowing motor (1) or the speed of said mowing motor (1) is < Vmin and it lasts for a period of T3, then skipping to step H;
H. said mowing motor control unit (3) controls said mowing motor (1) to stop, at the same time said mowing motor control unit (3) intercommunicates with said main control unit (7), and said left self-propelled motor control unit (2) and said right self-propelled motor control unit (4) control said left self-propelled motor (6) and said right self-propelled motor (5) to stop respectively, then said left self-propelled motor (6) and said right self-propelled motor (5) retreat first and then continue to work along the original forward cutting path; after attempting for M times, wherein 1≤M≤5; if said left self-propelled motor (6) and said right self-propelled motor (5) stop again, it is determined that the area is a dense grass area, then bypassing the dense grass area and skipping to the step C to continue working.

2. The mowing control method for an intelligent lawn mower according to claim 1, wherein: in the step E, the real-time speed V is dynamically adjusted between VL and VH following an equation V=VH*(I0/I)*K, where K is an adjustment coefficient, 0≤K≤1.

3. The mowing control method for an intelligent lawn mower according to claim 1, wherein: in the step H, said left self-propelled motor (6) and said right self-propelled motor (5) retreat first and then continue to work along the original cutting path, for which the specific steps are: said left self-propelled motor (6) and said right self-propelled motor (5) retreat at the speed VH for X1*N1 turns, and then continue to work at the speed VL along the original cutting path, said X1 is the coefficient of motor rotation, 0.1≤X1≤1, 1≤N1≤3.

4. The mowing control method for an intelligent lawn mower according to claim 1, wherein: in the step A, said It1 = I0*P, 1.1≤P≤5, and in the step D, step F, and step G, 0.1 s≤TI≤5 s.

5. The mowing control method for an intelligent lawn mower according to claim 1, wherein: in the step A, said It2 = It1*Y, 1.2≤Y≤ 3, and in the step E and step G, 1 s≤T2≤5 s.

6. The mowing control method for an intelligent lawn mower according to claim 1, wherein: in the step A, Vmin = Vmax*L, 0.15≤L≤0.65, and in the step G, 0.1 s≤T3≤3 s.

## Patentansprüche

1. Mähsteuerverfahren für einen intelligenten Rasenmäher, wobei der intelligente Rasenmäher einen linken selbstfahrenden Motor (6), eine Steuereinheit (2) für den linken selbstfahrenden Motor, einen rechten selbstfahrenden Motor (5), eine Steuereinheit (4) für den rechten selbstfahrenden Motor, einen Mähmotor (1), eine Steuereinheit (3) für den Mähmotor, eine Hauptsteuereinheit (7) und einen Begrenzungssensor (8) umfasst, wobei der linke selbstfahrende Motor (6) mit der Steuereinheit (2) für den linken selbstfahrenden Motor verbunden ist, der rechte selbstfahrende Motor (5) mit der Steuereinheit (4) für den rechten selbstfahrenden Motor verbunden ist, der Mähmotor (1) mit der Steuereinheit (3) für den Mähmotor verbunden ist, und die Steuereinheit (2) für den linken selbstfahrenden Motor, die Steuereinheit (4) für den rechten selbstfahrenden Motor, die Steuereinheit (3) für den Mähmotor und der Begrenzungssensor (8) jeweils mit der Hauptsteuereinheit (7) verbunden sind, wobei das Steuerverfahren die folgenden Schritte umfasst:
A. Erfassen eines Stroms 10 durch die Mähmotor-Steuereinheit (3), wenn der Mähmotor (1) eine Klinge für den Leerlaufbetrieb antreibt, und eines Echtzeit-Arbeitsstroms I, und Einstellen eines Stromschwellenwerts für den Mähmotor (1) zum Umschalten von einem Modus mit niedriger Geschwindigkeit in einen Modus mit hoher Geschwindigkeit als It1, eines Stromschwellenwerts für den Mähmotor (1) zum Umschalten von dem Hochgeschwindigkeitsmodus in den Niedriggeschwindigkeitsmodus als It2, eines Stromgrenzwerts eines Mähantriebsstroms als IR, eines minimalen Betriebsschwellenwerts für den Geschwindigkeitsschutz des Mähmotors (1) als Vmin und einer maximalen Betriebsgeschwindigkeit des Mähmotors (1) als Vmax;
**dadurch gekennzeichnet, dass** das Mähsteuerverfahren ferner die folgenden Schritte umfasst:
B. Erfassen der Echtzeitgeschwindigkeit V des linken selbstfahrenden Motors (6) und des rechten selbstfahrenden Motors (5) während des Betriebs durch die Steuereinheit (2) des linken selbstfahrenden Motors bzw. die Steuereinheit (4) des rechten selbstfahrenden Motors, und Einstellen der Geschwindigkeit während des Betriebs mit niedriger Geschwindigkeit als VL und der Geschwindigkeit während des Betriebs mit hoher Geschwindigkeit als VH;
C. bei der Arbeit läuft der Mähmotor (1) im Niedergeschwindigkeitsmodus, und der linke selbstfahrende Motor (6) und der rechte selbstfahrende Motor (5) laufen mit der Geschwindigkeit VH;
D. falls auf grasbewachsene Flächen treffend, wenn der Echtzeit-Arbeitsstrom I des Mähmotors (1) I0<I<It1 ist, wird der gegenwärtige Zustand beibehalten; wenn der Echtzeit-Arbeitsstrom I des Mähmotors (1) I≥It1 ist und für eine Dauer von T1 anhält, wird zu Schritt E übergegangen; wenn der Echtzeit-Arbeitsstrom I des Mähmotors (1) gleich dem Stromgrenzwert IR ist, wird zu Schritt G übergegangen;
E. die Mähmotor-Steuereinheit (3) den Mähmotor (1) in den Hochgeschwindigkeitsmodus schaltet, zur gleichen Zeit, zu der die Mähmotor-Steuereinheit (3) die Hauptsteuereinheit (7) anfordert, sendet die Hauptsteuereinheit (7) einen Verzögerungsbefehl an die linke selbstfahrende Motor-Steuereinheit (2) und die rechte selbstfahrende Motor-Steuereinheit (4), und die Steuereinheit (2) des linken selbstfahrenden Motors und die Steuereinheit (4) des rechten selbstfahrenden Motors reduzieren nach Empfang des Verzögerungsbefehls die Echtzeitgeschwindigkeit V des linken selbstfahrenden Motors (6) bzw. des rechten selbstfahrenden Motors (5) gleichzeitig, so dass die Echtzeitgeschwindigkeit V dynamisch zwischen VL und VH eingestellt wird; anschließend, wenn der Echtzeit-Arbeitsstrom I des Mähmotors (1) I<It2 ist und für eine Dauer von T2 anhält, wird zu Schritt F übergegangen; wenn der Echtzeit-Strom I des Mähmotors (1) gleich dem Stromgrenzwert IR ist, wird zu Schritt G übergegangen;
F. die Mähmotor-Steuereinheit (3) den Mähmotor (1) so steuert, dass er in den Niedriggeschwindigkeitsmodus umschaltet, zur gleichen Zeit, zu der die Mähmotor-Steuereinheit (3) die Hauptsteuereinheit (7) anfordert, sendet die Hauptsteuereinheit (7) einen Beschleunigungsbefehl an die linke selbstfahrende Motor-Steuereinheit (2) und die rechte selbstfahrende Motor-Steuereinheit (4), und die linke selbstfahrende Motor-Steuereinheit (2) und die rechte selbstfahrende Motor-Steuereinheit (4) nach Empfang des Beschleunigungsbefehls schalten die Echtzeitgeschwindigkeit V des linken selbstfahrenden Motors (6) und des rechten selbstfahrenden Motors (5) jeweils gleichzeitig auf VH um; anschließend, wenn der Echtzeit-Arbeitsstrom I des Mähmotors (1) I≥It1 ist und für eine Dauer von T1 anhält, wird zu Schritt E übergegangen; wenn der Echtzeit-Arbeitsstrom I des Mähmotors (1) gleich dem Stromgrenzwert IR ist, wird zu Schritt G übergegangen;
G. die Mähmotor-Steuereinheit (3) den Mähmotor (1) steuert, um in den Hochgeschwindigkeitsmodus zu schalten, die Mähmotor-Steuereinheit (3) die Hauptsteuereinheit (7) anfordert, die Hauptsteuereinheit (7) einen Verzögerungsbefehl an die linke selbstfahrende Motorsteuereinheit (2) und die rechte selbstfahrende Motorsteuereinheit (4) sendet und die Steuereinheit (2) des linken selbstfahrenden Motors und die Steuereinheit (4) des rechten selbstfahrenden Motors nach dem Empfang des Verzögerungsbefehls die Geschwindigkeit des linken selbstfahrenden Motors (6) bzw. des rechten selbstfahrenden Motors (5) auf VL einstellen; anschließend, wenn der Echtzeit-Arbeitsstrom I des Mähmotors (1) I<It2 ist und über eine Zeitspanne von T2 anhält, wird zu Schritt F übergegangen; wenn die Belastung des Mähmotors (1) zu hoch ist und einen Überstrom-Abschaltschutz des Mähmotors (1) verursacht oder die Geschwindigkeit des Mähmotors (1) < Vmin ist und über eine Zeitspanne von T3 anhält, wird zu Schritt H übergegangen;
H. die Mähmotor-Steuereinheit (3) den Mähmotor (1) so steuert, dass er anhält, gleichzeitig die Mähmotor-Steuereinheit (3) mit der Hauptsteuereinheit (7) kommuniziert und die Steuereinheit (2) für den linken selbstfahrenden Motor und die Steuereinheit (4) für den rechten selbstfahrenden Motor den linken selbstfahrenden Motor (6) bzw. den rechten selbstfahrenden Motor (5) so steuert, dass sie anhalten, dann der linke selbstfahrende Motor (6) und der rechte selbstfahrende Motor (5) sich zuerst zurückziehen und dann entlang des ursprünglichen Vorwärtsschneidwegs weiterarbeiten; nach M-maligem Versuch, wobei 1≤M≤5; wenn der linke selbstangetriebene Motor (6) und der rechte selbstangetriebene Motor (5) wieder anhalten, wird festgestellt, dass der Bereich ein Bereich mit dichtem Gras ist, dann wird der Bereich mit dichtem Gras umgangen und zum Schritt C übersprungen, um die Arbeit fortzusetzen.

2. Mähsteuerverfahren für einen intelligenten Rasenmäher nach Anspruch 1, wobei: im Schritt E die Echtzeitgeschwindigkeit V dynamisch zwischen VL und VH gemäß einer Gleichung V=VH*(I0/I)*K eingestellt wird, wobei K ein Einstellkoeffizient ist, 0≤K≤1.

3. Mähsteuerverfahren für einen intelligenten Rasenmäher nach Anspruch 1, wobei: in dem Schritt H der linke selbstfahrende Motor (6) und der rechte selbstfahrende Motor (5) zuerst zurückfahren und dann ihre Arbeit entlang des ursprünglichen Schneidpfades fortsetzen, wobei die spezifischen Schritte sind: der linke selbstfahrende Motor (6) und der rechte selbstfahrende Motor (5) fahren mit der Geschwindigkeit VH für X1*N1 Umdrehungen zurück und arbeiten dann mit der Geschwindigkeit VL entlang des ursprünglichen Schneidpfades weiter, wobei X1 der Koeffizient der Motordrehung ist, 0. 1≤X1≤1, 1≤N1≤3.

4. Mähsteuerverfahren für einen intelligenten Rasenmäher nach Anspruch 1, wobei: im Schritt A, It1 = I0*P, 1,1≤P≤5, und im Schritt D, Schritt F und Schritt G, 0,1 s≤T1≤5 s.

5. Mähsteuerverfahren für einen intelligenten Rasenmäher nach Anspruch 1, wobei: im Schritt A das It2 = It1*Y, 1,2≤Y≤3, und im Schritt E und im Schritt G, 1 s≤T2≤5 s.

6. Mähsteuerverfahren für einen intelligenten Rasenmäher nach Anspruch 1, wobei: im Schritt A Vmin = Vmax*L, 0,15≤L≤0,65, und im Schritt G, 0,1 s≤T3≤3 s.

## Revendications

1. Procédé de commande de tonte pour tondeuse intelligente, ladite tondeuse à gazon intelligente comprend un moteur automoteur gauche (6), une unité de commande de moteur automoteur gauche (2), un moteur automoteur droit (5), une unité de commande de moteur automoteur droit (4), un moteur de tonte (1), une unité de commande de moteur de tonte (3), une unité de commande principale (7) et un capteur de limite (8), ledit moteur automoteur gauche (6) est connecté à ladite unité de commande de moteur automoteur gauche (2), ledit moteur automoteur droit (5) est connecté à ladite unité de commande de moteur de tonte droite (4), ledit moteur de tonte (1) est connecté à ladite unité de commande de moteur de tonte (3), et ledit capteur de limite (8), ledit moteur automoteur droit (5) est connecté à ladite unité de commande du moteur automoteur droit (4), ledit moteur de tonte (1) est connecté à ladite unité de commande du moteur de tonte (3), et ladite unité de commande du moteur automoteur gauche (2), ladite unité de commande du moteur automoteur droit (4), ladite unité de commande du moteur de tonte (3) et ledit capteur de limite (8) sont respectivement connectés à ladite unité de commande principale (7), dans laquelle ladite méthode de commande comprend les étapes suivantes :
A. acquisition, par ladite unité de commande du moteur de tonte (3), d'un courant I0 lorsque ledit moteur de tonte (1) entraîne une lame en fonctionnement à vide et d'un courant de travail en temps réel I, et définition d'une valeur seuil de courant pour ledit moteur de tonte (1) afin de passer d'un mode à faible vitesse à un mode à grande vitesse en tant que It1, une valeur seuil de courant pour ledit moteur de tonte (1) pour passer du mode haute vitesse au mode basse vitesse comme It2, une valeur limite de courant d'entraînement de tonte comme IR, une valeur seuil de fonctionnement minimum pour la protection de la vitesse dudit moteur de tonte (1) comme Vmin, et une vitesse de fonctionnement maximum dudit moteur de tonte (1) comme Vmax ;
**caractérisé en ce que** la méthode de commande de la tonte comprend en outre les étapes suivantes :
B. acquisition, par ladite unité de commande du moteur automoteur gauche (2) et ladite unité de commande du moteur automoteur droit (4) respectivement, de la vitesse en temps réel V dudit moteur automoteur gauche (6) et dudit moteur automoteur droit (5) pendant le fonctionnement, et réglage de la vitesse pendant le fonctionnement à faible vitesse comme VL, et de la vitesse pendant le fonctionnement à grande vitesse comme VH ;
C. Lors du travail, le moteur de tonte (1) fonctionne en mode basse vitesse, et le moteur automoteur gauche (6) et le moteur automoteur droit (5) fonctionnent à la vitesse VH ;
D. lorsqu'il rencontre des zones herbeuses, si le courant de travail en temps réel I dudit moteur de tonte (1) est I0<I<It1, conserver l'état actuel ; si le courant de travail en temps réel I dudit moteur de tonte (1) est I≥It1 et dure pendant une période T1, passer à l'étape E ; si le courant de travail en temps réel I dudit moteur de tonte (1) est égal à la valeur de limite de courant IR, passer à l'étape G ;
E. Ladite unité de commande du moteur de tonte (3) fait passer ledit moteur de tonte (1) en mode haute vitesse, en même temps que ladite unité de commande du moteur de tonte (3) demande à ladite unité de commande principale (7), ladite unité de commande principale (7) envoie une commande de décélération à ladite unité de commande du moteur automoteur gauche (2) et à ladite unité de commande du moteur automoteur droit (4), et ladite unité de commande du moteur automoteur gauche (2) et ladite unité de commande du moteur automoteur droit (4), après avoir reçu la commande de décélération, réduisent la vitesse en temps réel V dudit moteur automoteur gauche (6) et dudit moteur automoteur droit (5) respectivement en même temps, de sorte que la vitesse en temps réel V est ajustée dynamiquement entre VL et VH ; ensuite, si le courant de travail en temps réel I dudit moteur de tonte (1) est I<It2 et qu'il dure pendant une période T2, on passe à l'étape F ; si le courant en temps réel I dudit moteur de tonte (1) est égal à la valeur limite de courant IR, on passe à l'étape G ;
F. ladite unité de commande du moteur de tonte (3) commande ledit moteur de tonte (1) pour passer en mode basse vitesse, en même temps que ladite unité de commande du moteur de tonte (3) demande à ladite unité de commande principale (7), ladite unité de commande principale (7) envoie une commande d'accélération à ladite unité de commande du moteur automoteur gauche (2) et à ladite unité de commande du moteur automoteur droit (4), et ladite unité de commande du moteur automoteur gauche (2) et ladite unité de commande du moteur automoteur droit (4), et ladite unité de commande du moteur automoteur gauche (2) et ladite unité de commande du moteur automoteur droit (4) envoient une commande d'accélération à ladite unité de commande du moteur automoteur gauche (2). (4), après avoir reçu la commande d'accélération, commuter la vitesse en temps réel V dudit moteur automoteur gauche (6) et dudit moteur automoteur droit (5) à VH respectivement en même temps ; ensuite, si le courant de travail en temps réel I dudit moteur de tonte (1) est I≥It1 et qu'il dure pendant une période de T1, passer à l'étape E ; si le courant de travail en temps réel I dudit moteur de tonte (1) est égal à la valeur limite de courant IR, passer à l'étape G ;
G. ladite unité de commande du moteur de tonte (3) commande ledit moteur de tonte (1) pour passer en mode haute vitesse, ladite unité de commande du moteur de tonte (3) demande ladite unité de commande principale (7), ladite unité de commande principale (7) envoie une commande de décélération à ladite unité de commande du moteur automoteur gauche (2) et à ladite unité de commande du moteur automoteur droit (4), et ladite unité de commande du moteur automoteur gauche (2) et ladite unité de commande du moteur automoteur droit (4), après avoir reçu la commande de décélération, ajustent la vitesse dudit moteur automoteur gauche (6) et dudit moteur automoteur droit (5) à VL respectivement ; ensuite, si le courant de travail en temps réel I dudit moteur de tonte (1) est I<It2 et qu'il dure pendant une période de T2, passer à l'étape F ; si la charge sur ledit moteur de tonte (1) est trop élevée et provoque une protection contre la coupure par surintensité dudit moteur de tonte (1) ou si la vitesse dudit moteur de tonte (1) est < Vmin et qu'elle dure pendant une période de T3, passer à l'étape H ;
H. ladite unité de commande du moteur de tonte (3) commande ledit moteur de tonte (1) pour s'arrêter, en même temps ladite unité de commande du moteur de tonte (3) communique avec ladite unité de commande principale (7), et ladite unité de commande du moteur automoteur gauche (2) et ladite unité de commande du moteur automoteur droit (4) commandent ledit moteur automoteur gauche (6) et ledit moteur automoteur droit (5) pour s'arrêter respectivement, puis ledit moteur automoteur gauche (6) et ledit moteur automoteur droit (5) reculent d'abord et continuent ensuite à travailler le long de la trajectoire de coupe initiale vers l'avant ; après avoir essayé pendant M fois, où 1≤M≤5 ; si ledit moteur automoteur gauche (6) et ledit moteur automoteur droit (5) s'arrêtent à nouveau, il est déterminé que la zone est une zone d'herbe dense, puis contourner la zone d'herbe dense et passer à l'étape C pour continuer à travailler.

2. Procédé de commande de tonte pour tondeuse intelligente selon la revendication 1, dans lequel : à l'étape E, la vitesse en temps réel V est ajustée dynamiquement entre VL et VH suivant une équation V=VH*(I0/I)*K, où K est un coefficient d'ajustement, 0≤K≤1.

3. Procédé de commande de tonte pour tondeuse intelligente selon la revendication 1, dans lequel : à l'étape H, ledit moteur automoteur gauche (6) et ledit moteur automoteur droit (5) reculent d'abord, puis continuent à travailler le long de la trajectoire de coupe initiale, pour laquelle les étapes spécifiques sont : ledit moteur automoteur gauche (6) et ledit moteur automoteur droit (5) reculent à la vitesse VH pendant X1*N1 tours, puis continuent à travailler à la vitesse VL le long de la trajectoire de coupe initiale, ledit X1 étant le coefficient de rotation du moteur, 0. 1≤X1≤1, 1≤N1≤3.

4. Procédé de commande de tonte pour tondeuse intelligente selon la revendication 1, dans lequel : à l'étape A, ledit It1 = I0*P, 1,1≤P≤5, et à l'étape D, à l'étape F, et à l'étape G, 0,1 s≤T1≤5 s.

5. Procédé de commande de tonte pour tondeuse intelligente selon la revendication 1, dans lequel : à l'étape A, ledit It2 = It1*Y, 1,2≤Y≤ 3, et à l'étape E et à l'étape G, 1 s≤T2≤5 s.

6. Procédé de commande de tonte pour tondeuse intelligente selon la revendication 1, dans lequel : à l'étape A, Vmin = Vmax*L, 0,15≤L≤0,65, et à l'étape G, 0,1 s≤T3≤3 s.
